# EUROPEAN PATENT SPECIFICATION

(11) **EP 3 633 814 B1**
(45) Date of publication and mention of the grant of the patent: **12.05.2021**
(21) Application number: 18197981.6
(22) Date of filing: 01.10.2018
(51) Int. Cl.: H02M 1/12, H02J 3/01, H01F 27/38

(54) **HARMONIC MITIGATION ARRANGEMENT FOR AN ELECTROMAGNETIC DEVICE**
OBERSCHWINGUNGSABSCHWÄCHUNGSANORDNUNG FÜR EINE ELEKTROMAGNETISCHE VORRICHTUNG
AGENCEMENT DE MITIGATION D'HARMONIQUE POUR UN DISPOSITIF ÉLECTROMAGNÉTIQUE

(43) Date of publication of application: 08.04.2020
(73) Proprietor: Siemens Energy Global GmbH & Co. KG, 81739 München (DE)
(72) Inventor: Bhatia, Rahul, 560100 Bangalore, Karnataka (IN)
(74) Representative: Patentanwaltskanzlei WILHELM & BECK

(56) References cited:
- CA-A1- 2 306 671
- GB-A- 509 862
- JP-A- 2002 272 113
- US-A- 5 341 281

## Description

The present invention relates to an electromagnetic device powering a non-linear load and having a magnetic core, and a primary winding positioned so as to induce flux in the magnetic core.

Such an electromagnetic device is known to a person skilled in the art. Such a commonly known electromagnetic device is, for example, a transformer such as a power transformer or a distribution transformer.

Majority of the electronic loads used today, especially in household and industrial applications, are non-linear in nature. A load is considered non-linear if it draws current of frequencies other than a frequency of the applied voltage. Due to this changing impedance, the current drawn by the non-linear load is also non-linear i.e. non-sinusoidal in nature, even when it is connected to a sinusoidal voltage source. Non-linear loads are, for example, computers, variable frequency drives, discharge lighting, adjustable speed motor drives, uninterruptible power supplies (UPS), battery chargers, etc. These non-sinusoidal currents contain harmonic currents that interact with the impedance of the power distribution system to create voltage distortion that can affect both the distribution system equipment and the loads connected to it. When a nonlinear load draws distorted (non-sinusoidal) current from the supply, the distorted current passes via all the impedances present between the load and power source. The associated harmonic currents passing through the system impedance cause voltage drops for each harmonic frequency. The vector sum of all the individual voltage drops results in total voltage distortion, the magnitude of which depends on the system impedance, available system fault current levels and the levels of harmonic currents at each harmonic frequency.

Moreover the voltage induced at generators in a power system, consists of only the fundamental component, therefore, no useful power is produced by these harmonic currents. Instead these harmonic currents, flowing in the distribution and transmission lines, give rise to additional copper losses thereby, reducing the overall efficiency of power system. Moreover, equipment like transformers, generators and motors need to be designed to handle such type of harmonic currents leading to de-rating of such equipment. In transformers for example, the effect of harmonic currents at harmonic frequencies causes increase in core losses due to increased iron losses. In addition, increased copper losses and stray flux losses result in additional heating, and winding insulation stresses. Similarly, harmonic distortion raises the losses in AC induction motors in a similar way as in transformers and cause increased heating, due to additional copper losses and iron losses in the stator winding, rotor circuit and rotor laminations. These losses are further compounded by skin effect, especially at higher frequencies. In comparison with utility power supplies, the effects of harmonic voltages and harmonic currents are significantly more pronounced on generators due to their source impedance being typically three to four times that of utility transformers. The major impact of voltage and current harmonics is to increase the machine heating due to increased iron losses, and copper losses, since both are frequency dependent and increase with increased harmonics. To reduce this effect of harmonic heating, the generators supplying nonlinear loads are required to be de-rated. In addition, presence of harmonic components along with nonlinear loading, results in localized heating and torque pulsations with torsional vibrations.

Typically, additional passive filters and/or active filters are connected in series or in parallel in a power grid to avoid problems originating from the induced harmonic currents. These filters typically condition an electrical power output waveform generated by a load device before being presented to another load device. However, passive harmonic filters are susceptible to changes in source and load impedances. Moreover, typically these filters fail to provide a selective and smoother control over the harmonic mitigation. They attract harmonics from other sources, and therefore, this must be taken into account in their design. Active filters on the other hand are more commonly used in industrial applications for both harmonic
mitigation and reactive power compensation as they do not present potential resonance to the power network and are unaffected due to changes in source impedance. However, active filters are complex due to use of high power electronic components and are also expensive. Also, careful commissioning of active filters is required to obtain optimum performance.

Document GB 509 862 A discloses an electric transformer. The electric transformer comprises a magnetic core 1, 3, 13, a primary winding 5a, an auxiliary winding 6, 6e, 6f and a cavity. Figs. 5 to 7 show the core and winding structure of the electric transformer in detail. The primary winding 5a is capable of carrying a primary current, whereas the auxiliary winding is capable of carrying an auxiliary current. The cavity is positioned between an outer wall of the magnetic core and an inner wall of the magnetic core.

Document CA 2 306 671 A1 discloses a harmonic filter, which is able to block the power frequency currents and create a low impedance path for all harmonics. The filter comprises a magnetic core, a primary winding, an auxiliary winding and a cavity in the the middle of the magnetic core. The primary and secondary winding are capable of carrying a primary current as well as an auxiliary current.

Document US 5 341 281 A discloses a transformer, which is connected between a utility and a load and a signal generator. The signal generator injects into the transformer a signal having a frequency which cancels undesirable higher order harmonics induced by the load. The low leakage reactance transformer comprises a coaxial structure having a thin hollow tube as the primary coil, a coaxial structure having a single main coaxial cable distributed into several parallel coaxial cables of smaller diameter, or a co-planar transformer structure having flat strip line conductors wrapped around a conventional core as the primary and secondary coils.

Document JP 2002 272113 A discloses a DC reactor device 10 which is inserted between a three-phase bridge rectifier 2 and a smoothing capacitor 4. The DC reactor device 10 comprises a DC reactor 11, a DC reactor auxiliary winding 14 wound to a core 13 of this DC reactor, a voltage source 15 connected to this DC reactor auxiliary winding 14 to generate an arbitrary voltage waveform, and a control circuit 16 for controlling the voltage source 15 so as to compensate the DC ripples.

Therefore, it is an object of the present invention to provide an electromagnetic device of the aforementioned kind that mitigates harmonic currents arising due to non-linear loads without increasing costs and design complexity associated with harmonic mitigation.

The electromagnetic device disclosed in the present invention achieves the aforementioned object, by providing a harmonic mitigation arrangement according to claim 1. In details, it comprises a magnetic core, a primary winding, and an auxiliary winding. The electromagnetic device disclosed herein is a device powering a non-linear load and having a magnetic core and used in power systems. The electromagnetic device is, for example, a transformer such as a power transformer, a reactor, or an inductor. The magnetic core comprises, for example, a ferro-magnetic core, a ferri-magnetic core, etc. The primary winding is capable of carrying a primary current therewithin and is positioned with respect to the magnetic core such that a flux is induced in the magnetic core during operation of the electromagnetic device. The auxiliary winding is capable of carrying an auxiliary current therewithin and is positioned at least partially within a cavity configured in the magnetic core. The cavity is a space defined in the magnetic core by drilling a hole through the magnetic core. The cavity is configured in the magnetic core to at least partially lie in path of the induced flux. Advantageously, the cavity is configured in the magnetic core such that an axis passing through a geometric center of the cavity also passes through a geometric center of the magnetic core. This symmetrical positioning of the cavity with respect to the magnetic core ensures that the harmonic mitigation is achieved equally in each of the positive and the negative half cycle operations of the electromagnetic device. The cavity is configured, for example, of a circular shape, a square shape, etc.

The auxiliary winding is wound either around an outer wall of the magnetic core through the cavity, or around an inner wall of the magnetic core through the cavity. The auxiliary winding dynamically induces a mitigating flux in the magnetic core, during operation of the electromagnetic device. As used herein, "mitigating flux" refers to the flux generated in the magnetic core around the cavity, due to the auxiliary current flowing in the auxiliary winding. This mitigating flux interacts with the induced flux caused by the primary current flowing through the primary winding, in the magnetic core. For example, during one half cycle operation, that is, positive or negative, the mitigating flux adds up with the induced flux on a side of the cavity where both fluxes are in same direction whereas on the other side of the cavity, the mitigating flux subtracts from the induced flux where both fluxes are in opposing directions. This results in increasing reluctance of the core in the area where the fluxes add up and reducing reluctance of the core in the area where the fluxes subtract. This increase in the core reluctance makes it comparable with reluctance of air thereby, causing the induced flux to tend to move over air instead of the magnetic core. The induced flux moves through air, that is, fringes through air including the ambient air surrounding the magnetic core and/or air inside the cavity. Thus, a virtual air-gap is introduced in the magnetic core. This virtual air-gap compensates for harmonics present in the induced flux by inducing a counter-opposing, that is, the mitigating flux via the auxiliary winding. Design parameters, for example, a number of Ampere-turns associated with the auxiliary winding are an optimized function of a load connected to the electromagnetic device, that is, a non-linear load inducing harmonic content, amount of harmonics present due to the load, physical properties of the magnetic core, and/or physical dimensions of the cavity. The electromagnetic device disclosed herein is not to be limited to a single phase of operation of the electromagnetic device but may be extended to a three phase operation.

According to an embodiment of the present invention, the electromagnetic device disclosed herein comprises a secondary winding at least partially wound around the magnetic core such that the induced flux in the magnetic core is coupled with the secondary winding producing a secondary current therewithin during operation of the electromagnetic device. In this embodiment, the electromagnetic device is, for example, a power transformer. The secondary winding is in turn connected to a non-linear load. The harmonic component in the induced flux is generated due to harmonics present in the secondary winding of the electromagnetic device. Using the aforementioned auxiliary winding and the mitigating flux associated therewith, these harmonics in the induced flux are removed by modulating the reluctance of the magnetic core. As a result voltages induced on the primary side of the electromagnetic device do not include such harmonics, that is, the harmonics are not reflected on the primary side of the electromagnetic device. The electromagnetic device comprises a parameter management module operably connected to the auxiliary winding of the electromagnetic device. The parameter management module is configured to modulate one or more parameters associated with the auxiliary winding based on a primary current of the primary winding, a primary voltage of the primary winding, a secondary current of the secondary winding and/or a secondary voltage of the secondary winding for controlling the mitigating flux induced by the auxiliary winding. The parameters comprise, for example, a magnitude, a frequency, and a phase of the auxiliary current. According to an embodiment of the present invention, the parameter management module is operably connected to the primary winding and the auxiliary winding where the one or more parameters are controlled based on the primary current and the primary voltage. According to another embodiment of the present invention, the parameter management module is operably connected to the secondary winding and the auxiliary winding where the one or more parameters are controlled based on the secondary current and the secondary voltage. The parameter management module comprises a sensing unit, for example, a current sensing unit and a voltage sensing unit, and a current controlling unit. The sensing unit is configured to sense voltage across the primary winding and/or the secondary winding. The current controlling unit based on the sensed voltage modulates the auxiliary current flowing in the auxiliary winding, thereby, modulating the mitigating flux in the magnetic core. For example, the magnitude of the auxiliary current is increased in correspondence to the increase in harmonics. The frequency of the auxiliary current is aligned in correspondence to the number of harmonic component, that is, for a third harmonic component the frequency will be maintained at 150Hz. The phase of the auxiliary current is a function of a power factor associated with the non-linear load. The electromagnetic device disclosed herein mitigates harmonics without use of any additional filters, without increasing costs and/or complexity of component design while offering a selective control over harmonic mitigation and a compact sized electromagnetic device.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a sectional view of an active part of an inductor as an embodiment of an electro-magnetic device, according to the present invention.
- FIG 2: illustrates a flux path of an induced flux during operation of the electromagnetic device illustrated in FIG 1.
- FIG 3: illustrates a sectional view of an active part of a power transformer as an embodiment of an electro-magnetic device, according to the present invention.
- FIG 4: illustrates an electrical equivalent circuit diagram of the electromagnetic device illustrated in FIG 3.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

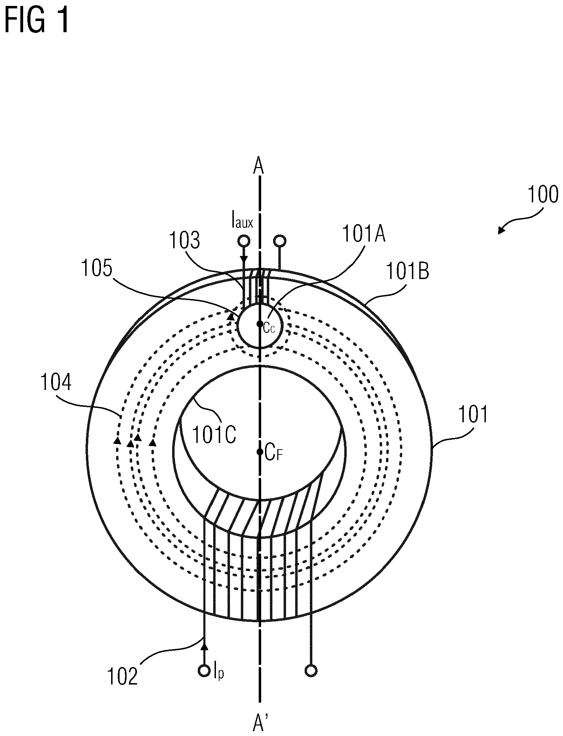

FIG 1 illustrates a sectional view of an active part of an inductor as an embodiment of an electro-magnetic device 100, according to the present invention. The inductor includes a magnetic core 101 with a primary winding 102 wound thereon. A primary current Ip flowing through the primary winding induces flux in the core 101 following the flux path 104. The core 101 has a cavity 101A configured therein. The cavity 101A is positioned between an outer wall 101B of the core 101 and an inner wall 101C of the core 101 along the thickness of the core 101 such that a common axis A-A' passes through a center Cc of the cavity 101A and a center C_{F} of the core 101. An auxiliary winding 103 is wound on the core 101 around the cavity 101A. The auxiliary winding 103 may be wound towards the outer wall 101B as shown in FIG 1A or towards the inner wall 101C. An auxiliary current Iₐᵤₓ flowing through the auxiliary winding 103 produces mitigating flux in the core 101 flowing in the flux path 105. This leads to addition of the induced flux 104 and the mitigating flux 105 in an area of the core 101 towards the outer wall 101B and subtraction of the mitigating flux 105 from the induced flux 104 in an area of the core 101 towards the inner wall 101C. The direction of flux flow shown in FIG 1 represents a half cycle operation. In other half cycle, the directions are reversed and therefore, the areas of flux concentration, that is, area of addition of flux and area of subtraction of flux, are also reversed.

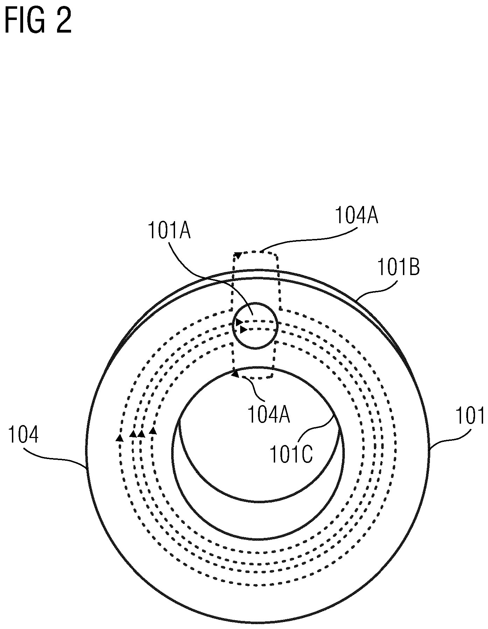

FIG 2 illustrates a flux path of an induced flux 104 during operation of the electromagnetic device 100 illustrated in FIG 1. As disclosed in FIG 1, generation of the mitigating flux 105 shown in FIG 1 results in, core reluctance becoming comparable with the air reluctance. Therefore, a part of the induced flux 104 fringes along flux path 104A via ambient air surrounding the outer wall 101B and the inner wall 101C of the core 101 as shown in FIG 2 and a part of the induced flux 104 flows through the air inside the cavity 101A in the core 101. This, results in creation of a virtual air gap in the core 101 thereby, compensating for harmonic content.

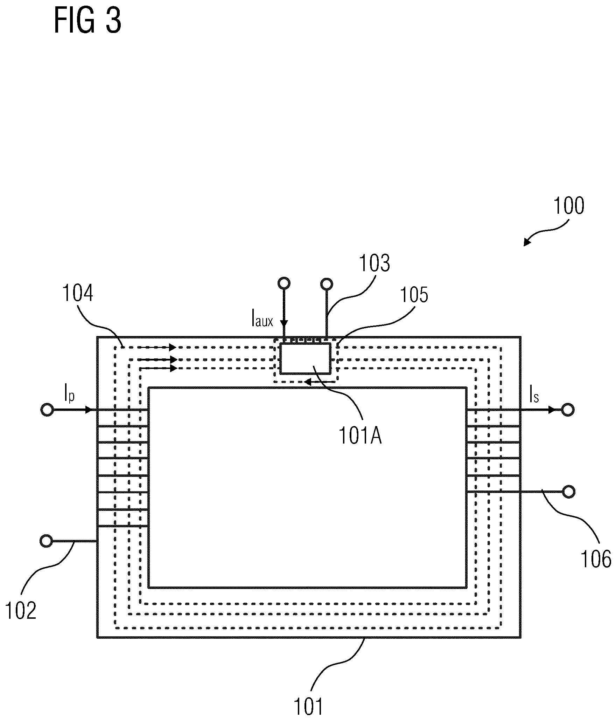

FIG 3 illustrates a sectional view of an active part of a power transformer as an embodiment of an electro-magnetic device 100, according to the present invention. The power transformer has a core 101 with a primary winding 102 and a secondary winding 106 wound thereon. The primary winding 102 carries a primary current I_{P} therein resulting in an induced flux 104 in the core 101. The induced flux 104 couples with the secondary winding 106 thereby producing a secondary current Is therein. The secondary winding 106 is connected to a non-linear load. The core 101 has a cavity 101A symmetrically positioned therein and having an auxiliary winding 103 wound thereon carrying an auxiliary current Iₐᵤₓ producing a mitigating flux 105 in the core 101 around the cavity 101A. As shown in FIG 2, the induced flux 104 for the power transformer shown in FIG 3, also flows via air when the mitigating flux 105 interacts with the induced flux 104.

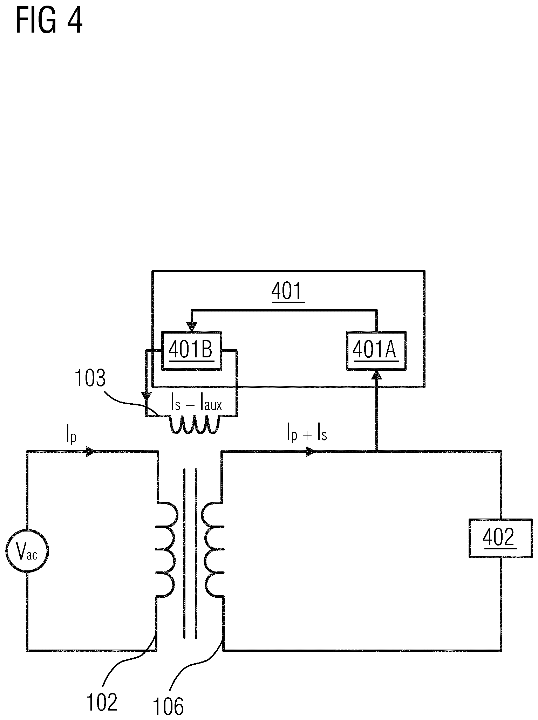

FIG 4 illustrates an electrical equivalent circuit diagram of the electromagnetic device 100 illustrated in FIG 3. The electrical equivalent circuit diagram represents a closed loop control system for mitigation of harmonics. The electrical equivalent circuit diagram includes a primary winding 102 and a secondary winding 106. The secondary winding 106 is connected to a nonlinear harmonic load 402 via a parameter management module 401. The parameter management module 401 has a sensing unit 401A operably connected with a current controlling unit 401B controlling auxiliary current Iₐᵤₓ flowing in the auxiliary winding 103. The parameter management module 401 modulates a magnitude, a frequency, and/or a phase of the auxiliary current Iₐᵤₓ flowing the auxiliary winding 103 in synchronization with the secondary current Iₛ or voltage thus providing a closed loop control of the auxiliary current Iₐᵤₓ.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims.

### List of reference numerals

- 100: electromagnetic device
- 101: magnetic core
- 101A: cavity
- 101B: outer wall of the magnetic core
- 101C: inner wall of the magnetic core
- 102: primary winding
- 103: auxiliary winding
- 104: induced flux due to primary winding/flux path of the induced flux
- 104A: fringing flux
- 105: mitigating flux due to auxiliary winding/flux path of the mitigating flux
- 106: secondary winding
- 401: parameter management module
- 401A: sensing unit
- 401B: current controlling unit
- 402: harmonic load/non-linear load
- I_{P}: primary current
- Iₛ: secondary current
- Iₐᵤₓ: auxiliary current
- C_{C}: geometric center of cavity
- C_{F}: geometric center of magnetic core
- A-A': axis passing through C_{C} and C_{F}

## Claims

1. An electromagnetic device (100) having:
- a magnetic core (101);
- a primary winding (102) capable of carrying a primary current (I_{P}) therewithin and positioned with respect to the magnetic core (101) such that a flux (104) is induced in the magnetic core (101) during operation of the electromagnetic device (100);
- an auxiliary winding (103) capable of carrying an auxiliary current (Iₐᵤₓ) therewithin and positioned at least partially within a cavity (101A) configured in the magnetic core (101), such that a mitigating flux (105) is dynamically induced in the magnetic core (101), during operation of the electromagnetic device (100),
wherein the cavity (101A) is positioned between an outer wall of the magnetic core (101B) and an inner wall of the magnetic core (101C) along the thickness of the core (101), and
**characterised in that** the auxiliary winding (103) is wound either around the outer wall of the magnetic core (101B) through the cavity (101A) or around the inner wall of the magnetic core (101C) through the cavity (101A).

2. The electromagnetic device (100) according to the claim 1, further comprising a secondary winding (106) at least partially wound around the magnetic core (101) such that the induced flux (104) is coupled with the secondary winding (106) producing a secondary current (I_{S}) therewithin during operation of the electromagnetic device (100).

3. The electromagnetic device (100) according to any one the claims 1 and 2, further comprising a parameter management module (401) operably connected to the auxiliary winding (103) of the electromagnetic device (100).

4. The electromagnetic device (100) according to the claim 3, wherein the parameter management module (401) is configured to control a mitigating flux (106) induced by the auxiliary winding (103) by modulating one or more parameters associated with the auxiliary winding (103) based on one or more of a primary current (I_{P}), a primary voltage (Vac), a secondary current (I_{S}), and a secondary voltage (V_{S}).

5. The electromagnetic device (100) according to the claim 4, wherein the one or more parameters comprise a magnitude, a frequency, and a phase of the auxiliary current (Iₐᵤₓ).

6. The electromagnetic device (100) according to the claim 1, wherein the cavity (101A) is configured in the magnetic core (101) to at least partially lie in path of the induced flux (104).

7. The electromagnetic device (100) according to any one of the claims 1 and 6, wherein the cavity (101A) is configured in the magnetic core (101) along an axis (A-A') passing through a center (C_{C}) of the cavity (101A) and a center (C_{F}) of the magnetic core (101).

8. The electromagnetic device (100) according to any one of the previous claims is one of a power transformer, a filter, and a reactor.

## Patentansprüche

1. Elektromagnetische Vorrichtung (100), die Folgendes aufweist:
- einen Magnetkern (101);
- eine Primärwicklung (102), die einen Primärstrom (Iₚ) darin führen kann und in Bezug auf den Magnetkern (101) derart angeordnet ist, dass während des Betriebs der elektromagnetischen Vorrichtung (100) ein Fluss (104) im Magnetkern (101) induziert wird;
- eine Hilfswicklung (103), die einen Hilfsstrom (Iₐᵤₓ) darin führen kann und zumindest teilweise in einem Hohlraum (101A) angeordnet ist, der im Magnetkern (101) konfiguriert ist, derart, dass während des Betriebs der elektromagnetischen Vorrichtung (100) ein abschwächender Fluss (105) im Magnetkern (101) dynamisch induziert wird,
wobei der Hohlraum (101A) zwischen einer Außenwand (101B) des Magnetkerns und eine Innenwand (101C) des Magnetkerns entlang der Dicke des Kerns (101) angeordnet ist, und
**dadurch gekennzeichnet, dass** die Hilfswicklung (103) entweder um die Außenwand (101B) des Magnetkerns durch den Hohlraum (101A) oder um die Innenwand (101C) des Magnetkerns durch den Hohlraum (101A) gewickelt ist.

2. Elektromagnetische Vorrichtung (100) nach Anspruch 1, die ferner eine Sekundärwicklung, (106) umfasst, die zumindest teilweise um den Magnetkern (101) gewickelt ist, derart, dass der induzierte Fluss (104) mit der Sekundärwicklung (106) gekoppelt ist, wobei während des Betriebs der elektromagnetischen Vorrichtung (100) ein Sekundärstrom (Iₛ) darin erzeugt wird.

3. Elektromagnetische Vorrichtung (100) nach einem der Ansprüche 1 und 2, die ferner ein Parametermanagementmodul (401) umfasst, das mit der Hilfswicklung (103) der elektromagnetischen Vorrichtung (100) betriebstechnisch gekoppelt ist.

4. Elektromagnetische Vorrichtung (100) nach Anspruch 3, wobei das Parametermanagementmodul (401) konfiguriert ist, einen abschwächenden Fluss (106), der durch die Hilfswicklung (103) induziert wird, durch Modulieren eines oder mehrerer Parameter, die der Hilfswicklung (103) zugeordnet sind, auf der Grundlage eines Primärstroms (Iₚ) und/oder einer Primärspannung (Vac) und/oder eines Sekundärstroms (Iₛ) und/oder einer Sekundärspannung (Vₛ) zu steuern.

5. Elektromagnetische Vorrichtung (100) nach Anspruch 4, wobei der eine oder die mehreren Parameter eine Größe, eine Frequenz und eine Phase des Hilfsstroms (Iₐᵤₓ) umfassen.

6. Elektromagnetische Vorrichtung (100) nach Anspruch 1, wobei der Hohlraum (101A) derart im Magnetkern (101) konfiguriert ist, dass er zumindest teilweise im Weg des induzierten Flusses (104) liegt.

7. Elektromagnetische Vorrichtung (100) nach einem der Ansprüche 1 und 6, wobei der Hohlraum (101A) im Magnetkern (101) entlang einer Achse (A-A'), die durch ein Zentrum (C_{c}) des Hohlraums (101A) und ein Zentrum (C_{F}) des Magnetkerns (101) verläuft, konfiguriert ist.

8. Elektromagnetische Vorrichtung (100) nach einem der vorhergehenden Ansprüche, die entweder ein Leistungstransformator, ein Filter oder ein Reaktor ist.

## Revendications

1. Dispositif électromagnétique (100) comportant :
- un noyau magnétique (101) ;
- un enroulement primaire (102) capable de porter un courant primaire (I_{P}) en son sein et positionné relativement au noyau magnétique (101) de manière à induire un flux (104) dans le noyau magnétique (101) durant le fonctionnement du dispositif électromagnétique (100) ;
- un enroulement auxiliaire (103) capables de porter ou auxiliaire (Iₐᵤₓ) en son sein et positionné au moins partiellement à l'intérieur d'une cavité (101A) configurer dans le noyau magnétique (101) de manière à induire dynamiquement un flux d'atténuation (105) dans le noyau magnétique (101) durant le fonctionnement du dispositif électromagnétique (100) ;
dans lequel la cavité (101A) est positionnée entre une paroi externe du noyau magnétique (101B) et une paroi interne du noyau magnétique (101C) le long d'une épaisseur du noyau (101), et
**caractérisé en ce que** l'enroulement auxiliaire (103) est soit enroulé autour de la paroi externe du noyau magnétique (101B) à travers la cavité (101A), soit autour de la paroi interne du noyau magnétique (101C) à travers la cavité (101A).

2. Dispositif électromagnétique (100) selon la revendication 1, comprenant en outre un enroulement secondaire (106) enroulée au moins partiellement autour du noyau magnétique (101) de manière à coupler le flux induit (104) à l'enroulement secondaire (106) produisant un courant secondaire (Iₛ) avec celui-ci durant le fonctionnement du dispositif électromagnétique (100).

3. Dispositif électromagnétique (100) selon l'une quelconque des revendications 1 et 2, comprenant en outre un module de gestion de paramètres (401) connecté fonctionnellement à l'enroulement auxiliaire (103) du dispositif électromagnétique (100) .

4. Dispositif électromagnétique (100) selon la revendication 3, dans lequel le module de gestion de paramètres (401) est configuré pour réguler un flux d'atténuation (106) induit par l'enroulement auxiliaire (103) en modulant un ou plusieurs paramètres associés à l'enroulement auxiliaire (103) en fonction d'un courant primaire (I_{P}), d'une tension primaire (Vac), d'un courant secondaire (Iₛ), et/ou d'une tension secondaire (Vₛ).

5. Dispositif électromagnétique (100) selon la revendication 4, dans lequel les un ou plusieurs paramètres comprennent une amplitude, une fréquence et une phase du courant auxiliaire (Iₐᵤₓ).

6. Dispositif électromagnétique (100) selon la revendication 1, dans lequel la cavité (101A) est configurée dans le noyau magnétique (101) pour reposer au moins partiellement sur le chemin du flux induit (104).

7. Dispositif électromagnétique (100) selon l'une quelconque des revendications 1 et 6, dans lequel la cavité (101A) est configurée dans le noyau magnétique (101) le long d'un axe (A-A') passant par un centre (C_{C}) de la cavité (101A) et un centre (C_{F}) du noyau magnétique (101) .

8. Dispositif électromagnétique (100) selon l'une quelconque des revendications précédentes, lequel est un transformateur de puissance, un filtre, ou un réacteur.
